# EUROPEAN PATENT APPLICATION

(11) **EP 1 202 530 A2**
(43) Date of publication of application: **02.05.2002**
(21) Application number: 01650126.4
(22) Date of filing: 16.10.2001
(51) Int. Cl.: H04L 29/06

(54) **Backhauling of call signalling for multiple protocols**

(30) Priority: 31.10.2000 US 703154
(71) Applicant: Nortel Networks Limited, St. Laurent, Quebec H4S 2A9 (CA)
(72) Inventor: Rao, Sanjay, Apex, North Carolina, 27502 (US); Khanchandani, Durham, North Carolina 27713 (US); Ergincan, Fahir O., Meersburg 88709 (DE)
(74) Representative: Boyce, Conor

(57) **Abstract**

The present invention provides for backhauling layers for multiple protocols from a media gateway to a media gateway controller. For media gateways supporting access networks using multiple protocols, the upper level call processing layer of each of the multiple protocols is backhauled to the media gateway controller. In messages sent from the media gateway to the media gateway controller, the particular protocol being used is identified. As such, the media gateway informs the media gateway controller of the proper protocol used in association with call processing messages.

## Description

### Field of the Invention

The present invention relates in general to telephony communications, and in particular, to backhauling call signaling over a packet-switched network.

### Background of the Invention

There is a growing interest in the convergence of the public switched telephone network (PSTN), the Internet and other internets and intranets. The convergence of these networks requires technology that facilitates interworking in a uniform and effective manner. The next generation of unified networks will provide an open and scalable architecture to accommodate multiple vendors and protocols under a single communication scheme.

The traditional PSTN provides constant bandwidth streams of information between users. These media streams travel over dedicated circuits, typically between telephones. Circuit-switched networks were originally designed for carrying voice traffic and handling calling patterns, but with the emergence of the Internet, are now handling significant amounts of data traffic. The data traffic occupies a significant amount of the bandwidth of the circuit-switched network as the data makes its way to Internet protocol (IP)-based networks. In addition, the IP-based networks are now carrying significant amounts of data that relate to voice, fax and video, in addition to conventional data.

Since packet-switching networks appear to be the common thread between all of the many networks, there is a need to seamlessly interwork all networks and individual endpoints connected to these networks. The interface between circuit-switched networks and packet-switched networks is provided by media (or signaling) gateways. Media gateways require interaction with media gateway controllers to provide decision-making and coordination with other media gateways. The interaction between media gateways and media gateway controllers is provided over packet-switched networks.

The primary responsibility of the media gateway is to allow media of various types, including voice, fax, video and data to be transported in a unified network. Typically, the media must be transportable both as packets in an IP-based network and as digital or analog streams in a circuit-switched network. In such applications, the media gateways provide bi-directional communications between a circuit-switched network and media-related elements associated within an IP network. Further, the media gateways facilitate the transfer of media among one another.

The media gateway controllers provide media gateways with instructions on interconnecting two or more telephony or IP elements in order to exchange information. For example, media gateway controllers instruct media gateways on how to set up, handle and terminate media flows, such as Internet connections or telephone calls between end users or end points. The media gateways will typically interact with end users in telephony applications via various types of access networks. These access networks may take on many forms depending on the application. An access network may be a telephony exchange, such as a private branch exchange (PBX), local exchange, end office, or the like for the public switched telephone network (PSTN).

Unfortunately, the PSTN is a fairly rigid system, making the convergence of various networking technologies difficult. Further, with the use of media gateways and media gateway controllers, there is a desire to shift call processing capability from dedicated call processing networks, such as dedicated Signaling System Number 7 (SS7) systems, to the media gateways and media gateway controllers. Although call processing can be provided in this new environment, the PSTN continues to provide the majority of connections to the end users. All of these systems typically have dedicated call signaling protocols that are not interchangeable and are difficult to handle in a media gateway environment, especially when access networks are tasked with handling different protocols from different access technologies.

As with the PSTN, the media gateway environment has recognized the benefit of providing call signaling, such as call processing, using a media gateway controller. Given the desire to provide call processing in the media gateway controller, a technique generally referred to as "backhauling" has been developed to facilitate a call signaling interface between circuit-switched and packet-switched networks. In operation, the media gateway will terminate the lower levels of a call signaling protocol and backhaul the higher layer(s), which contains the call signaling, to the media gateway controller. The primary purpose for backhauling is to reliably pass layers of a protocol through the media gateway directly to the media gateway controller while allowing the lower levels of the protocol to terminate at the media gateway. Backhauling allows distribution of protocol processing to facilitate expansion and scaling of network elements.

Currently, backhauling call signaling is done for a particular protocol in a particular technology. Although access networks are now capable of providing support for telephony systems requiring different protocols, there is no available technique for a single media gateway to efficiently backhaul call signaling for multiple protocols and access networks efficiently. As such, there is a need for an efficient technique to allow backhauling of call signaling for multiple protocols serviced by a single media gateway.

### Summary of the Invention

The present invention provides for backhauling layers for multiple protocols from a media gateway to a media gateway controller. For media gateways supporting access networks using multiple protocols, the upper level call processing layer of each of the multiple protocols is backhauled to the media gateway controller. In messages sent from the media gateway to the media gateway controller, the particular protocol being used is identified. As such, the media gateway informs the media gateway controller of the proper protocol used in association with call processing messages.

In the preferred embodiment, the ISDN user adaptation (IUA) layer protocol is modified to provide additional support for the V5 protocol set, and in particular, for the V5.2 protocols. As modified, media gateways can support any number of the various PSTN, ISDN, and like protocols from one or more access networks or endpoints and backhaul call processing protocol layers to a media gateway controller. The existing message header for the IUA layer protocol is modified to provide a field for identifying the particular protocol of the layer(s) being backhauled.

### Brief Description of the Drawing Figures

FIGURE 1 is a block representation of a network configured according to the present invention.

FIGURE 2A is a block representation of an ISDN user adaptation layer protocol being backhauled to a media gateway controller according to the prior art.

FIGURE 2B is an ISDN user adaptation layer protocol message header according to the prior art.

FIGURE 3A is a block representation of a selected protocol being backhauled to a media gateway controller according to a preferred embodiment of the present invention.

FIGURE 3B is an ISDN user adaptation layer protocol message header modified according to the present invention.

FIGURE 4 is a flow chart outlining the basic backhauling process of the present invention.

FIGURE 5 is a block representation of a media gateway according to a preferred embodiment of the present invention.

FIGURE 6 is a block representation of a media gateway controller according to a preferred embodiment of the present invention.

### Detailed Description of the Preferred Embodiments

The focus of the present invention is to facilitate seamless interworking of communication networks, including the various networks forming the public switched telephone network (PSTN) and multi-purpose packet-switching networks, such as Internet Protocol (IP)-based networks. To facilitate the interconnection and interworking of various ones of these networks, there are two primary elements: a media gateway and a media gateway controller. The media gateway provides the actual interface between access networks and a packet-switched network. The media gateway controller provides decision-making and coordination between media gateways to facilitate interworking.

The primary responsibility of a media gateway is to allow media of various types, such as data, voice and video, to be transported in unified networks. Media gateways are configured to allow media to be transportable, both as packets in an IP or ATM network and as analog or digital streams in more traditional circuit-switched networks. The gateways allow media to move without loss of integrity or quality between networks and network technologies. In essence, the media gateway provides a bi-directional interface between networks, and typically, between a circuit-switched network and media-related elements in an IP network. Media gateways may interact with IP telephony applications residing in computers attached to a network, or with other media gateways. Media gateways may also provide physical interfaces to the PSTN and may be used to replace switching components normally used in the plain old telephone system (POTS).

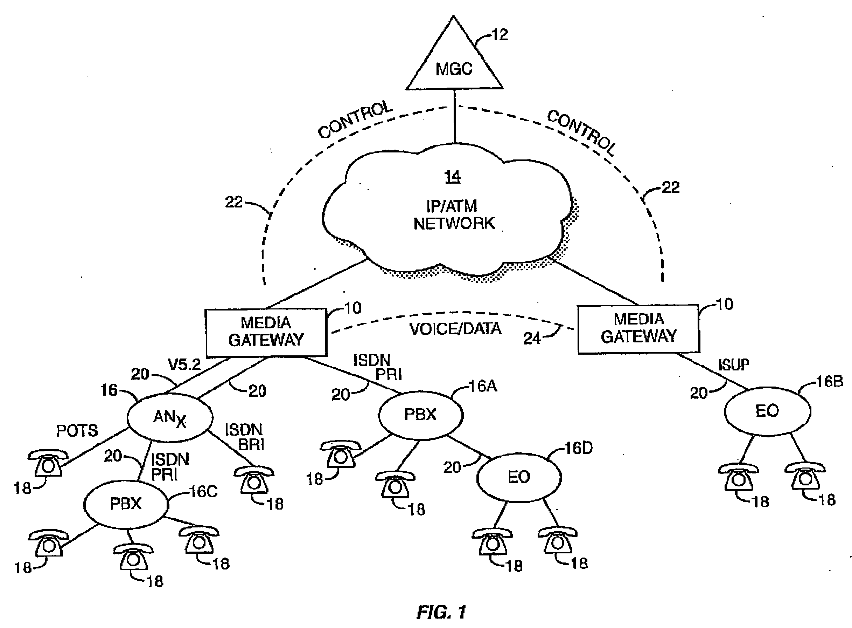

Referring now to Figure 1, a network topology is shown wherein two media gateways 10 facilitate media flow under the control of the media gateway controller 12 via an Internet protocol (IP) or asynchronous transfer mode (ATM) network 14. The media gateways 10 are shown connected to various types of access networks, generally referenced as 16. These access networks may be traditional circuit-switched type networks, such as a local or private branch exchange (PBX) 16A or a telephony end office 16B. These access networks 16, 16A may support additional access networks, such as PBX 16C and end office 16D.

Any of these access networks 16 will preferably support various telephony devices 18, such as traditional telephones, facsimiles and modems. The access networks 16 are preferably connected to each other and to the respective media gateways 10 via telephony trunks, such as Tls (U.S.) or E1s (Europe).

During operation, various telephony devices 18 will communicate with one another and require call processing to facilitate setting up, establishing and tearing down a call. Depending on the telephony access, call signaling protocols will vary. Regardless of this variance, call signaling for call processing is provided to the respective media gateway 10 from the servicing access network 16. The present invention is directed to allowing the media gateways 10 to backhaul the call signaling 22 to the media gateway controller 12 for media flow control. Further, the media gateways 10 can provide delivery of voice/data traffic 24 between media gateways 10 according to the call processing provided by the media gateway controller 12.

As depicted in Figure 1, access network 16, designated ANₓ, is servicing a telephony device 18 via a traditional POTS connection, a second telephony device 18 via an ISDN basic rate interface (BRI), and the PBX 16C via an ISDN primary rate interface (PRI). The PBX 16C is depicted as servicing additional telephony devices 18. The access network 16 (ANₓ) thus requires at least three unique protocols to facilitate call signaling for the POTS, ISDN PRI and the ISDN BRI. The V5.2 protocol family supports certain of the necessary protocols, and is adapted to facilitate transfer of the call signaling within these protocols between the access network 16 and the corresponding media gateway 10.

The media gateway 10 supporting access network 16 (ANₓ) also directly supports PBX 16A via an ISDN PRI, and thus, must directly support the ISDN PRI call signaling protocol in addition to the V5.2 protocols. Further, PBX 16A supports end office 16D. The media gateway 10 supporting end office 16B may use the ISDN User Part (ISUP) protocol. Although Figure 1 is merely illustrative and not intended to provide an exhaustive list of various types of call signaling protocols a media gateway may need to support, it is clear that media gateways 10 must support multiple call signaling protocols in integrated networks.

Although the media gateways 10 may be configured to cooperate with each of these protocols, the more difficult issue arises when the call signaling layers from protocols used in the various access networks 16 (including 16A, 16B, 16C and 16D) need to be backhauled to the media gateway controller 12 for call processing.

Traditional backhauling techniques provided by a media gateway 10 do not provide for backhauling layers for multiple protocols from multiple access networks in an efficient manner. Preferably, support for the various PSTN and ISDN protocols may be provided by modifying backhauling techniques used in dedicated ISDN media gateways 12. The preferred protocol to modify is the ISDN Q.921 User Adaptation (IUA) layer protocol as described in the internet draft of the Internet Engineering Task Force entitled "ISDN Q.921-User Adaptation Layer" (draft-IETF-SIGTRAN-IUA-06.txt).

The IUA layer protocol backhauls ISDN Q.921 user messages over IP using the Stream Control Transmission Protocol (SCTP). As noted, the IUA Layer Protocol is used between the media gateway 10 and the media gateway controller 12 wherein ISDN signaling is provided between the media gateway 10 and an access network 16 over a standard ISDN-type interface. For reference, the term Switched Circuit Network (SCN) signaling protocol is used to refer to the signaling protocol used for any of the various types of circuit-switched networks. The IUA layer protocol includes an upper layer or layers relegated to call processing wherein the lower layers of the protocol are used for communications between the media gateways 10 and the access network 16. The upper layer of the IUA layer protocol is referred to as the Q.931 layer.

In the dedicated ISDN media gateway example, the ISDN media gateway 10 will terminate the lower layers of the SCN protocol and backhaul the upper layers, including the Q.931 layer, to the media gateway controller 12 for call processing. The dedicated ISDN media gateway 10 will terminate the lower layers of the protocol.

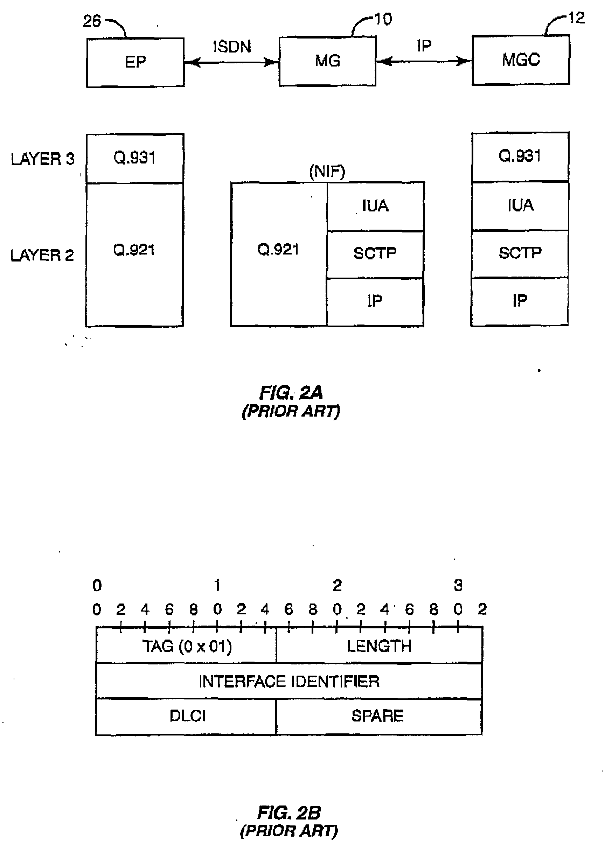

As depicted in Figure 2A, the lower layer protocol (Q.921) facilitates delivery of the call signaling protocol (Q.931) between an end point 26, such as telephony device 18 and the media gateway 10. A nodal interworking function will cooperate to convert the call signaling protocol carrier to the IUA layer protocol. As depicted, the IUA layer protocol uses the services of the SCTP, a reliable transport protocol, which is facilitated over IP. As such, the media gateway 10 terminates the lower layers of the Q.921 layer protocol and uses the IUA layer protocol to backhaul the Q.931 protocol layer to the media gateway controller 12. Traditionally, call signaling is relegated to defined end points 26 directly connected to a media gateway 10, and is currently not useful for communicating between an access network 16 and the media gateway 10, especially where the access network 16 supports various protocols.

The message header for an IUA message is shown in Figure 2B. The TAG field defines the type of message, and the length field defines the length of the message. The INTERFACE IDENTIFIER field identifies the type of telephony interface associated with the message. The Data Link Control Identifier (DLCI) field may be used to identify a specific link for a particular telephony communication. The remaining bits in the header are spares.

As noted, the present invention preferably provides for backhauling of call signaling using a modified version of the IUA layer protocol. The modifications can provide for backhauling of call signaling layers between a media gateway 10 and an endpoint or an access network 16. According to the best mode of practicing the invention, the IUA layer protocol is modified for backhauling V5.2 signaling messages from the media gateway 10 to the media gateway controller 12. Typically, the V5 protocol stack is used between an access network 16 and a local exchange for the following access methods:
- analog telephone access;
- ISDN basic rate access;
- ISDN primary rate access (V5.2); and
- other analog or digital accesses for semi-permanent connections without associated outband signaling information.

The basic V5 protocol uses 2048 kbps links, and the V5.2 protocol may use up to sixteen of these links. When providing analog access, signaling from the PSTN is converted into part of the V5 protocol for signaling via the access network. For ISDN, the protocol layer is defined in the V5 protocol for the exchange of individual functions and messages required for call signaling. Additionally, the V5.2 protocol has several additional protocols. The first is a bearer channel connection protocol, which establishes and tears down bearer connections on demand, under the control of the access network. Second, a link control protocol is provided for multiple link management to control link identification, blocking and failure conditions. A protection protocol is also provided to operate on separate data links. The protection protocol is defined to manage the protection switching of communication channels in case of link failures. The following protocols are defined for the various protocol layers:
LAPV5-EF,
LAPV5-DL,
V5-link control,
V5-bearer channel control,
V5-PSTN,
V5-control, and
V5-protection.
Additional detail on the V5 series protocols, including V5.2 is readily available and is considered within the knowledge of one skilled in the art.

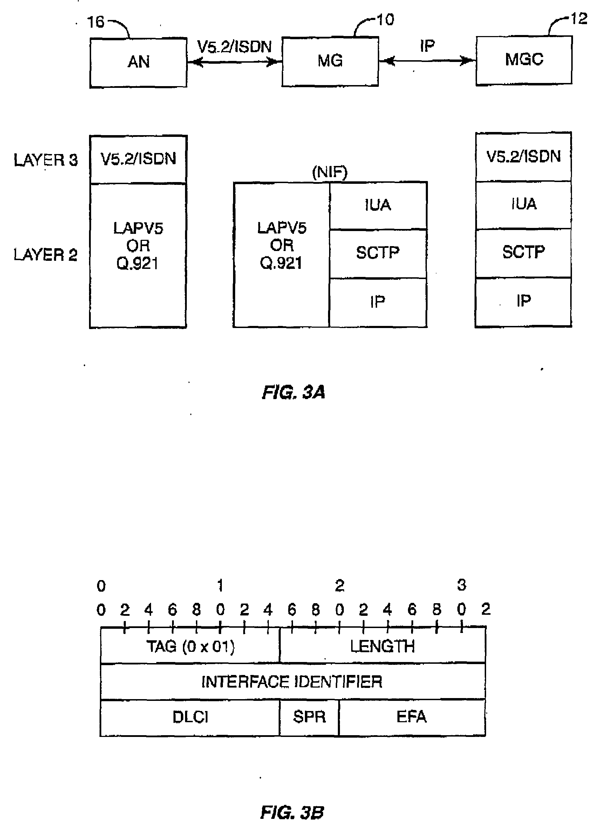

Turning now to Figure 3A, a preferred backhauling protocol strategy is depicted. As depicted, the Layer 3 call signaling protocol layer, preferably a V5.2 layer call signaling message, is supported using one of the Layer 2 protocol layers of the V5 protocol family, such as LAPV5. In essence, the LAPV5 protocol facilitates transport of V5.2 call signaling messages between the access network 16 and the media gateway 10. At the media gateway 10, a nodal interworking function will convert the Layer 2 protocol to a modified IUA layer protocol for backhauling the Layer 3 call signaling message to the media gateway controller 12. Preferably, the media gateway 10 configures the IUA protocol message according to the type of protocol used between the access network 16 and the media gateway 10.

As shown in Figure 3B, an additional field is provided in the IUA message header to identify the call signaling protocol being backhauled. The original SPARE field is now partially replaced with an Envelope Function Address (EFA) field. The EFA will preferably identify one of the V5.2 protocols, such as a specific ISDN protocol supported between the access network 16 and the media gateway 10. The following table contains exemplary values and definitions for an EFA.

| **Definition** | **Value** |
|---|---|
| ISDN protocol(s) | 0-8175 |
| PSTN protocol | 8176 |
| Control protocol | 8177 |
| Bearer channel connection | 8178 |
| Protection protocol | 8179 |
| Link control protocol | 8180 |
| Reserved | 8181-8191 |

The table above assumes that a 13 bit number, ranging between 0 and 8191 (decimal) is used for the EFA field. Preferably, the EFA defines a particular communication path, which may inherently identify the protocol for the backhauled call signaling layer. All the remaining fields in the IUA message may remain the same. Returning now to Figure 3A, it is clear that the IUA protocol, or like protocol, may be configured to backhaul call signaling according to various types of protocols. In the preferred embodiment, the Layer 3 protocols may include various types of ISDN protocols as well as the predefined V5.2 protocols. Those skilled in the art will recognize that the inventive concepts disclosed herein may allow the use of any number of call signaling protocols, and are not limited to those specifically described herein.

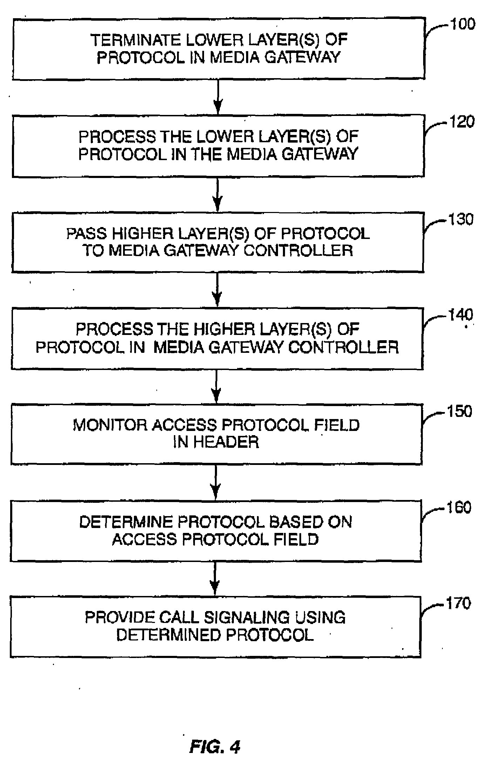

The overall flow for backhauling call signaling for various protocols is outlined in Figure 4. Assume that the media gateway 10 is associated with multiple access networks 16 using various call signaling protocols. The process begins wherein the media gateway 10 will terminate the lower layers of the call signaling protocol (block 100) and process these lower layers accordingly (block 120). For backhauling, the media gateway will pass the higher layers of the call signaling protocol to the media gateway controller (block 130). The media gateway controller will process the higher layers of the protocol (block 140) and monitor an access protocol field in the message header (block 150).

In the preferred embodiments discussed above, the access protocol field is the EFA in the modified IUA message header. The media gateway controller 10 will determine which protocol to use based on the access protocol field (block 160) and provide call signaling using the determined protocol (block 170). In this fashion, backhauling is provided for multiple call signaling protocols supported by various access technologies. In particular, V5.2 call signaling messages may be backhauled with only minor modifications to support the modified IUA layer protocol discussed above. These changes may be done completely in software.

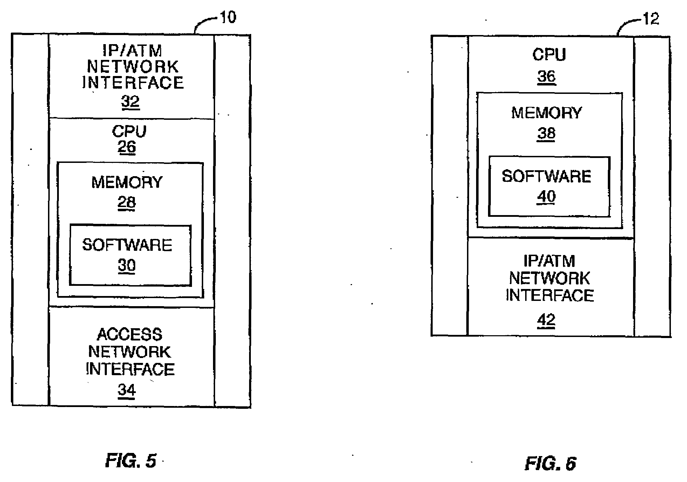

In Figure 5, a block schematic of a media gateway 10 is shown having a central processing unit (CPU) 26 containing memory 28 and the requisite software 30. The CPU 26 cooperates to provide a bi-directional interface between an IP/ATM network interface 32 and an access network interface 34. The IP/ATM network interface 32 would preferably connect to the IP/ATM network 14, as referenced in Figure 1, while the access network interface 34 is the interface opposite the IP/ATM network interface 32 and may interface with traditional trunks and lines of a telephone network or like network system to connect to end points 26 or access networks 16.

Figure 6 is a block schematic of a media gateway controller 12 having a CPU 36 with associated memory 38 and software 40. The media gateway controller 12 will have at least one interface, preferably an IPM/ATM network interface 42 capable of communicating across the ATM/IP network 14.

## Claims

1. A method of backhauling multiple communication protocols comprising:
a) communicating with an access network supporting at least two protocols, each of the at least two protocols having at least one lower protocol layer and at least one upper protocol layer for call signaling;
b) terminating the at least one lower protocol layer of the at least two protocols; and
c) backhauling the at least one upper protocol layer of the at least two protocols to a media gateway controller in a manner identifying one of the at least two protocols being backhauled.

2. A method of backhauling communication protocols to facilitate call processing for media gateways, which support access networks using multiple communication protocols, said method comprising:
a) terminating at least one upper layer of at least two protocols backhauled from a media gateway, each of the at least two protocols also having at least one lower protocol layer wherein the at least one upper protocol layer provides for call signaling and the at least one lower protocol layer of the at least two protocols is terminated at the media gateway;
b) identifying one of the at least two protocols being backhauled; and
c) providing call signaling for the media gateway based on the identified one of the at least two protocols.

3. The method of claim 1 or 2 wherein the at least two protocols include a first protocol for communications over a first telephony network supported by the access network and a second protocol for communications over a second telephony network supported by the access network.

4. The method of claim 3 wherein the step of backhauling includes receiving packets including a message header from the media gateway, the message header identifying at least one of the first and second protocols.

5. The method of claim 3 wherein the step of backhauling includes providing a message header for packets sent to the media gateway controller, the message header identifying at least one of the first and second protocols.

6. The method of claim 4 or 5 wherein the first protocol includes a set of protocols.

7. The method of claim 3 further comprising effecting telephony communications over a packet-switched network for the access network and wherein the first and second telephony networks support circuit-switched communications via the access network.

8. The method of claim 6 wherein the message header identifies a specific protocol within the set of protocols when backhauling the at least one upper layer of the first protocol.

9. The method of claim 6 wherein the set of protocols includes certain protocols from the group consisting of public switched telephone network protocol, control protocol, bearer channel control protocol, protection protocol, and link control protocol.

10. The method of claim 6 wherein the message header identifies a specific protocol within the set of protocols being backhauled.

11. The method of claim 6 wherein the second protocol is an ISDN User Adaptation Layer Protocol.

12. The method of claim 8 or 10 wherein the second protocol is an ISDN protocol and the first protocol is one of a set of V5.2 protocols.

13. The method of claim 4 or 5 further comprising identifying the one of the at least two protocols being backhauled by monitoring a protocol identifier in a protocol identification field in the message header.

14. An apparatus for backhauling multiple communication protocols comprising:
a) a circuit-switched interface for communicating with an access network over a circuit-switched network;
b) a packet-switched interface for communicating with a media gateway controller over a packet-switched network; and
c) a control system associated with said circuit-switched interface and said packet-switched interface and adapted to:
i) communicate with an access network supporting at least two protocols, each of the at least two protocols having at least one lower protocol layer and at least one upper protocol layer for call signaling;
ii) terminate the at least one lower protocol layer of the at least two protocols; and
iii) backhaul the at least one upper protocol layer of the at least two protocols to a media gateway controller in a manner identifying one of the at least two protocols being backhauled.

15. An apparatus to facilitate call processing for media gateways, which support access networks using multiple communication protocols, said apparatus comprising:
a) a packet-switched interface for communicating with a media gateway over a packet-switched network; and
b) a control system associated with said packet-switched interface and adapted to:
i) terminate at least one upper layer of at least two protocols backhauled from a media gateway, each of the at least two protocols also having at least one lower protocol layer wherein the at least one upper protocol layer provides for call signaling and the at least one lower protocol layer of the at least two protocols is terminated at the media gateway;
ii) identify one of the at least two protocols being backhauled; and
iii) provide call signaling for the media gateway based on the identified one of the at least two protocols.

16. A computer readable medium comprising software for instructing a computer to facilitate backhauling multiple communication protocols by performing the steps of claims 1 to 13.

17. A system for backhauling multiple communication protocols comprising:
a) means for communicating with an access network supporting at least two protocols, each of the at least two protocols having at least one lower protocol layer and at least one upper protocol layer for call signaling;
b) means for terminating the at least one lower protocol layer of the at least two protocols; and
c) means for backhauling the at least one upper protocol layer of the at least two protocols to a media gateway controller in a manner identifying one of the at least two protocols being backhauled.

18. A packet for an ISDN user adaptation layer protocol comprising a header with a tag field, a length field; an interface identifier, a data link control identifier and a protocol identifier, said protocol identifier identifying one of at least two protocols being backhauled to a media gateway controller from a media gateway.
